# EUROPEAN PATENT APPLICATION

(11) **EP 4 460 110 A1**
(43) Date of publication of application: **06.11.2024**
(21) Application number: 24173991.1
(22) Date of filing: 03.05.2024
(51) Int. Cl.: H04W 52/02

(54) **METHOD FOR PERFORMING MODE SWITCHING MANAGEMENT IN MULTI-LINK OPERATION ARCHITECTURE, AND ASSOCIATED APPARATUS**

(30) Priority: 04.05.2023 US 202363500062 P; 02.05.2024 US 202418652818
(71) Applicant: MediaTek Inc., Hsin-Chu 300 (TW)
(72) Inventor: KANG, Hao-Hua, 30078 Hsinchu City (TW); WU, Cheng-Ying, 30078 Hsinchu City (TW)
(74) Representative: Hoefer & Partner Patentanwälte mbB

(57) **Abstract**

A method for performing mode switching management in multi-link operation (MLO) architecture and associated apparatus (120, 220, 110, 210) are provided. The method applicable to a wireless transceiver device (120, 220, 110, 210) communicating with another device (110, 210, 120, 220) within a wireless communications system (100) may include: executing a mode switching procedure regarding a predetermined MLO-related mode in a first protection period dedicated to the mode switching procedure, so that no other transmission request is received during the first protection period, where the first protection period is equal to or longer than the time spent on executing the mode switching.

## Description

### Field of the Invention

The present invention is related to a method for performing mode switching management in multi-link operation (MLO) architecture and associated apparatus (e.g., wireless transceiver devices such as a station (STA) device and an access point (AP) device) according to the pre-characterizing clauses of claims 1 and 12. This application claims the benefit of U.S. Provisional Application No. 63/500,062, filed on May 4th, 2023. The content of the application is incorporated herein by reference.

### Background of the Invention

According to the related art, a wireless communications device of a wireless local area network (WLAN) may operate in any predetermined radio frequency band among multiple predetermined radio frequency bands, and the way of communicating with any other device of the WLAN may depend on a current operation mode of the wireless communications device. For example, the wireless communications device may perform mode switching to change the way of using some internal resources thereof in order to operate correctly, and this may take a certain length of time, so the wireless communications device may be unable to receive a packet from the other device in time and errors may occur due to failing to receive the packet, causing overall performance to be reduced. It seems that no proper suggestion has been proposed to try solving the problem. Thus, a novel method and associated architecture are needed for solving the problem without introducing any side effect or in a way that is less likely to introduce a side effect.

### Summary of the Invention

This in mind, the present invention aims at providing a method for performing mode switching management in MLO architecture and associated apparatus (e.g., wireless transceiver devices such as a STA device and an AP device) that guarantee the overall performance.

This is achieved by a method for performing mode switching management in multi-link operation (MLO) architecture and associated apparatus according to the pre-characterizing clauses of claims 1 and 12. The dependent claims pertain to corresponding further developments and improvements.

In one aspect, the disclosure features a method for performing mode switching management in MLO architecture, where the method can be applied to a wireless transceiver device communicating with another device within a wireless communications system. For example, the method may comprise: executing a mode switching procedure regarding a predetermined MLO-related mode in a first protection period dedicated to the mode switching procedure, so that no other transmission request is received during the first protection period, where the first protection period is equal to or longer than the time spent on executing the mode switching. In some examples, the mode switching procedure may comprise: sending a protection indication in a first communications frame from the wireless transceiver device to the aforementioned another device (or "the other device") that informs the other device not to send any transmission request. For example, the protection indication may comprise a network allocation vector (NAV) for indicating the first protection period determined by the wireless transceiver device, or comprise a power save mode indication to inform the other device that the wireless transceiver device enters a power save mode. In some other examples, before executing the mode switching procedure, the wireless transceiver device may be arranged to perform information exchange with the other device in order to notify the other device of a mode switch processing delay as the first protection period, for reserving the first protection period.

In one aspect, the disclosure features a wireless transceiver device for performing mode switching management in MLO architecture, where the wireless transceiver device is one of multiple devices within a wireless communications system. The wireless transceiver device may comprise a processing circuit that is arranged to control operations of the wireless transceiver device. The wireless transceiver device may further comprise at least one communications control circuit that is coupled to the processing circuit and arranged to perform communications control, wherein the at least one communications control circuit is arranged to perform wireless communications operations with another device among the multiple devices for the wireless transceiver device. For example, the wireless transceiver device is arranged to execute a mode switching procedure regarding a predetermined MLO-related mode in a first protection period dedicated to the mode switching procedure, so that no other transmission request is received during the first protection period, where the first protection period is equal to or longer than the time spent on executing the mode switching.

It is an advantage of the present invention that, through proper design, the present invention method, as well as the associated apparatus such as the wireless transceiver device, can prevent failure of receiving a packet from the other device, and more particularly, reserve at least one protection period (e.g., at least one locked period) for the wireless transceiver device to perform mode switching to change the way of using some internal resources thereof in order to operate correctly, and prevent the other device from sending any packet during the aforementioned at least one protection period, to allow the wireless transceiver device to complete the mode switching and then be ready for interacting with the other device, and therefore enhance the overall performance. Additionally, the present invention method and apparatus can solve the related art problems without introducing any side effect or in a way that is less likely to introduce a side effect.

### Brief Description of the Drawings

In the following, the invention is further illustrated by way of example, taking reference to the accompanying drawings. Thereof
- FIG. 1: is a diagram of a wireless communications system according to an embodiment of the present invention,
- FIG. 2: is a diagram illustrating a setup control scheme for AP and non-AP STA multi-link devices (MLDs) according to an embodiment of the present invention,
- FIG. 3: illustrates, in the lower half part thereof, a protection period control scheme of a method for performing mode switching management in MLO architecture according to an embodiment of the present invention, and further illustrates, in the upper half part thereof, a first non-protection control scheme for better comprehension,
- FIG. 4: illustrates, in the lower half part thereof, the protection period control scheme of the method according to another embodiment of the present invention, and further illustrates, in the upper half part thereof, a second non-protection control scheme for better comprehension,
- FIG. 5: is a diagram illustrating a first EMLSR enablement control scheme of the method according to an embodiment of the present invention,
- FIG. 6: is a diagram illustrating a second EMLSR enablement control scheme of the method according to an embodiment of the present invention,
- FIG. 7: is a diagram illustrating a third EMLSR enablement control scheme of the method according to an embodiment of the present invention,
- FIG. 8: is a diagram illustrating a fourth EMLSR enablement control scheme of the method according to an embodiment of the present invention,
- FIG. 9: is a diagram illustrating a fifth EMLSR enablement control scheme of the method according to an embodiment of the present invention,
- FIG. 10: is a diagram illustrating a first EMLSR disablement control scheme of the method according to an embodiment of the present invention,
- FIG. 11: is a diagram illustrating a second EMLSR disablement control scheme of the method according to an embodiment of the present invention,
- FIG. 12: is a diagram illustrating a third EMLSR disablement control scheme of the method according to an embodiment of the present invention,
- FIG. 13: is a diagram illustrating a fourth EMLSR disablement control scheme of the method according to an embodiment of the present invention,
- FIG. 14: is a diagram illustrating a fifth EMLSR disablement control scheme of the method according to an embodiment of the present invention,
- FIG. 15: is a diagram illustrating another EMLSR enablement control scheme of the method according to an embodiment of the present invention,
- FIG. 16: is a diagram illustrating an EMLSR enablement and disablement control scheme of the method according to an embodiment of the present invention, and
- FIG. 17: illustrates a working flow of the method according to an embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

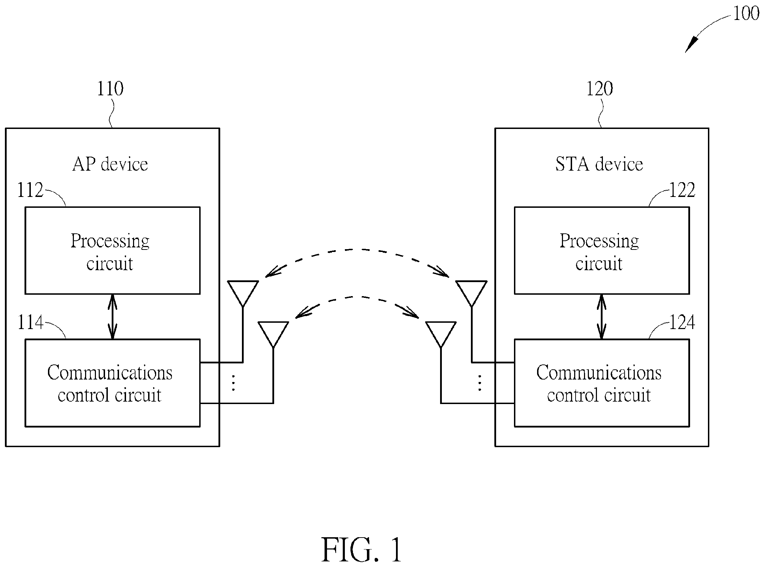

Embodiments of the present invention provide a wireless communications system comprising multiple wireless transceiver devices. For better comprehension, the wireless communications system, as well as any wireless transceiver device among the multiple wireless transceiver devices, may be compatible or back-compatible to one or more versions of the Institute of Electrical and Electronics Engineers (IEEE) 802.11 standards, but the present invention is not limited thereto. FIG. 1 is a diagram of a wireless communications system 100 according to an embodiment of the present invention. The wireless communications system 100 may comprise an AP device 110 and a STA device 120, where the wireless communications system 100 may be taken as an example of the wireless communications system mentioned above, and the AP device 110 and a STA device 120 may be taken as examples of the multiple wireless transceiver devices mentioned above. As shown in FIG. 1, the AP device 110 may comprise a processing circuit 112, at least one communications control circuit (e.g., one or more communications control circuits), which may be collectively referred to as the communications control circuit 114, and multiple antennas of the communications control circuit 114, and the STA device 120 may comprise a processing circuit 122, at least one communications control circuit (e.g., one or more communications control circuits), which may be collectively referred to as the communications control circuit 124, and multiple antennas of the communications control circuit 124.

In the architecture shown in FIG. 1, the processing circuit 112 can be arranged to control operations of the AP device 110 to make the AP device 110 act as at least one AP in the wireless communications system 100, such as multiple APs integrated into the AP device 110, and the communications control circuit 114 can be arranged to perform communications control, and more particularly, perform wireless communications operations with the STA device 120 (or the communications control circuit 124 thereof) for the AP device 110. In addition, the processing circuit 122 can be arranged to control operations of the STA device 120 to make the STA device 120 act as at least one STA in the wireless communications system 100, such as multiple STAs integrated into the STA device 120, and the communications control circuit 124 can be arranged to perform communications control, and more particularly, perform wireless communications operations with the AP device 110 (or the communications control circuit 114 thereof) for the STA device 120.

According to some embodiments, the processing circuit 112 can be implemented by way of at least one processor/microprocessor, at least one random access memory (RAM), at least one bus, etc., and the communications control circuit 114 can be implemented by way of at least one wireless network control circuit and at least one wired network control circuit, but the present invention is not limited thereto. Examples of the AP device 110 may include, but are not limited to: a Wi-Fi router. In addition, the processing circuit 122 can be implemented by way of at least one processor/microprocessor, at least one RAM, at least one bus, etc., and the communications control circuit 124 can be implemented by way of at least one wireless network control circuit, but the present invention is not limited thereto. Examples of the STA device 120 may include, but are not limited to: a multifunctional mobile phone, a laptop computer, an all-in-one computer and a wearable device.

According to some embodiments, the AP device 110 may be implemented as an AP MLD, and the STA device 120 may be implemented as a STA MLD, where any communications control circuit among the communications control circuits 114 and 124 may represent multiple communications control circuits (e.g., three communications control circuits) respectively corresponding to multiple predetermined radio frequency bands (e.g., the 2.4 gigahertz (GHz) band, the 5 GHz band and the 6 GHz band), but the present invention is not limited thereto. According to some embodiments, the multiple predetermined radio frequency bands, the radio frequency band count of the multiple predetermined radio frequency bands, the multiple communications control circuits, and/or the communications control circuit count of the multiple communications control circuits may vary.

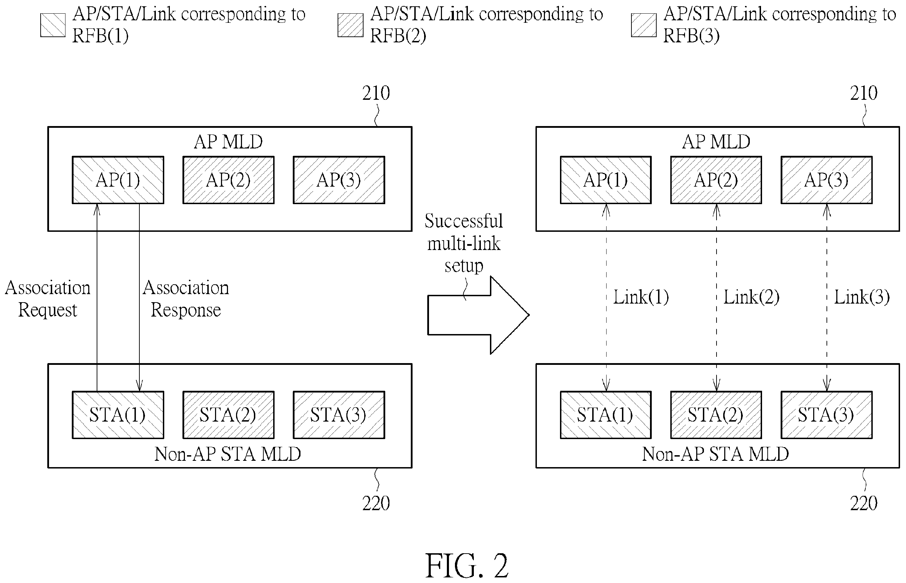

FIG. 2 is a diagram illustrating a setup control scheme for the AP and non-AP STA MLDs according to an embodiment of the present invention, where the AP MLD 210 and the non-AP STA MLD 220 may be taken as examples of the AP MLD and the STA MLD mentioned above, respectively, and three predetermined radio frequency bands RFB(1), RFB(2) and RFB(3) may be taken as examples of the multiple predetermined radio frequency bands. The AP MLD 210 and the non-AP STA MLD 220 may be configured to set up multiple links respectively corresponding to the multiple predetermined radio frequency bands, such as the links Link(1), Link(2) and Link(3) respectively corresponding to the predetermined radio frequency bands RFB(1), RFB(2) and RFB(3) (e.g., the 2.4 GHz band, the 5 GHz band and the 6 GHz band), and perform channel usage management, mode switching management, etc. in MLO architecture. For example, the AP MLD 210 may be equipped with multiple APs such as the APs AP(1), AP(2) and AP(3) respectively corresponding to the predetermined radio frequency bands RFB(1), RFB(2) and RFB(3), and the non-AP STA MLD 220 may be equipped with multiple non-AP STAs such as the STAs STA(1), STA(2) and STA(3) respectively corresponding to the predetermined radio frequency bands RFB(1), RFB(2) and RFB(3). The non-AP STA MLD 220 may utilize a STA STA(x) corresponding to a predetermined radio frequency band RFB(x) among the multiple non-AP STAs, such as the STA STA(1), to send an association request to the AP MLD 210, and the AP MLD 210 may utilize an AP AP(x) corresponding to the same predetermined radio frequency band RFB(x) among the multiple APs, such as the AP AP(1), to send an association response to the non-AP STA MLD 220, to complete a successful multi-link setup. As a result, the AP MLD 210 and the non-AP STA MLD 220 may establish the links {Link(1), Link(2), Link(3)} between the APs {AP(1), AP(2), AP(3)} and the STAs {STA(1), STA(2), STA(3)}, respectively. Based on the MLO architecture shown in FIG. 2, the AP MLD 210 and the non-AP STA MLD 220 may communicate with each other by using the multiple links such as the links {Link(1), Link(2), Link(3)}.

According to some embodiments, the aforementioned any wireless transceiver device within the wireless communications system 100 may operate according to a method for performing mode switching management in the aforementioned MLO architecture (e.g., the MLO architecture shown in FIG. 2), without performing any ineffective communications, in order to successfully perform mode switching (or mode change) regarding a predetermined MI,O-related mode and therefore properly use the multiple links such as the links {Link(1), Link(2), Link(3)}. For example, the predetermined MI,O-related mode may represent an enhanced multi-link single radio (EMLSR) mode or an enhanced multi-link multi-radio (EMLMR) mode. The wireless transceiver device (e.g., the STA device 120 such as the non-AP STA MLD 220) may communicate with another device (e.g., the AP device 110 such as the AP MLD 210) within the wireless communications system 100 through at least one portion (e.g., a portion or all) of the multiple links respectively corresponding to the multiple predetermined radio frequency bands. For better comprehension, the multiple links may represent multiple MLD links, such as the links Link(1), Link(2) and Link(3) respectively corresponding to the predetermined radio frequency bands RFB(1), RFB(2) and RFB(3) (e.g., the 2.4 GHz band, the 5 GHz band and the 6 GHz band) as illustrated in FIG. 2, but the present invention is not limited thereto. When there is a need, the wireless transceiver device such as the non-AP STA MLD 220 may execute a mode switching procedure regarding the predetermined MI,O-related mode such as the EMLSR mode or the EMLMR mode, and more particularly, execute the mode switching procedure regarding the predetermined MI,O-related mode in a first protection period dedicated to the mode switching procedure, so that no other transmission request is received during the first protection period, where the first protection period may be equal to or longer than the time spent on executing the mode switching. For example, the wireless transceiver device (e.g., the non-AP STA MLD 220) may perform MLO mode change processing during the first protection period for completing the mode switching (or the mode change), which may comprise any operation among an operation of entering the predetermined MI,O-related mode and an operation of exiting the predetermined MLO-related mode.

For a first case that the protection of the first protection period is enabled during the mode switching procedure, the associated operations of the mode switching procedure may comprise: (1) the wireless transceiver device (e.g., the non-AP STA MLD 220) may send a protection indication in a first communications frame from the wireless transceiver device to the other device (e.g., the AP MLD 210) that informs the other device not to send any transmission request; but the present invention is not limited thereto. According to some embodiments, the associated operations of the mode switching procedure may vary. For a second case that the protection of the first protection period is enabled before executing the mode switching procedure, it is unnecessary to send the protection indication in the first communications frame from the wireless transceiver device (e.g., the non-AP STA MLD 220) to the other device (e.g., the AP MLD 210) during the mode switching procedure. More particularly, before executing the mode switching procedure, the wireless transceiver device (e.g., the non-AP STA MLD 220) may perform information exchange with the other device (e.g., the AP MLD 210) in order to notify the other device of a mode switch processing delay as the first protection period, for reserving the first protection period.

In addition, taking the EMLSR mode as an example of the predetermined MI,O-related mode, the wireless transceiver device (e.g., the non-AP STA MLD 220) may operate in the EMLSR mode on a set of EMLSR links (e.g., a specified set of enabled links) among the multiple links with the other device (e.g., the AP MLD 210), and the two wireless transceiver devices (e.g., the AP MLD 210 and the non-AP STA MLD 220) shall only exchange frames on one of the EMLSR links at any time. In the following embodiments, the set of EMLSR links may comprise the link Link(1) between the STA STA(1) and the AP AP(1) and the link Link(2) between the STA STA(2) and the AP AP(2), where the STAs STA(1), STA(2), etc. and the APs AP(1), AP(2), etc. may be referred to as the STAs STA1, STA2, etc. and the APs AP1, AP2, etc., respectively, for brevity, but the present invention is not limited thereto. In some examples, the set of EMLSR links may comprise more than two links, such as all links among the multiple links (e.g., the links Link(1), Link(2) and Link(3)).

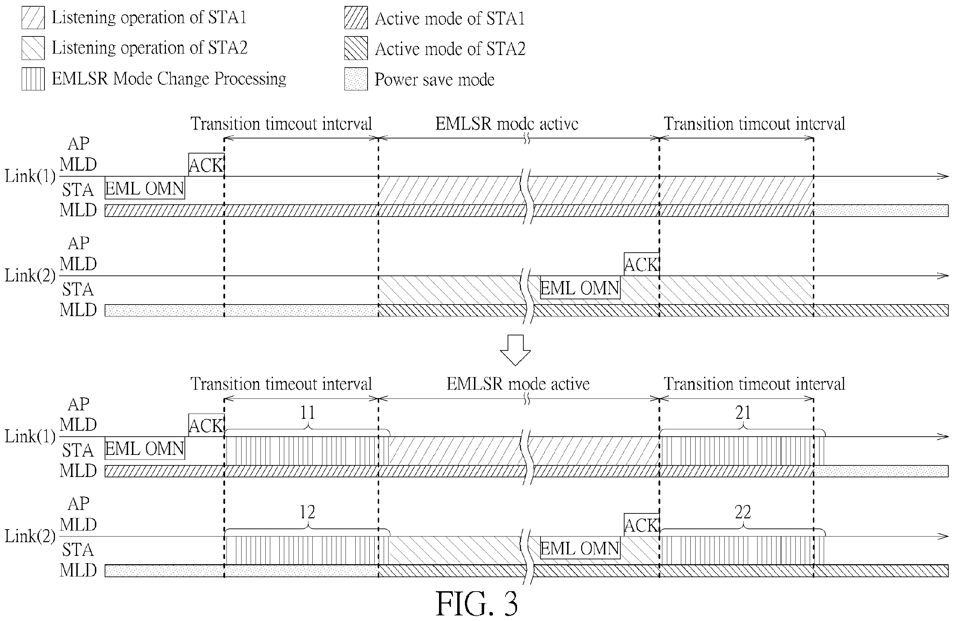

FIG. 3 illustrates, in the lower half part thereof, a protection period control scheme of the method for performing the mode switching management in the MLO architecture according to an embodiment of the present invention, where a first non-protection control scheme may be illustrated in the upper half part of FIG. 3 for better comprehension. Based on the first non-protection control scheme, the non-AP STA MLD 220 (labeled "STA MLD" for brevity) may send an enhanced multi-link (EML) operation mode notification (OMN) frame (labeled "EML OMN" for brevity) to the AP MLD 210 when trying to enable/disable the EMLSR mode, and then receive the acknowledgment (ACK) for the EML OMN frame, and shall enable/disable the EMLSR mode after a transition timeout interval indicated by a transition timeout value announced by the AP MLD 210 has expired. For example, as shown in the upper left part of FIG. 3, when trying to enable the EMLSR mode, the non-AP STAMLD 220 may send the EML OMN frame to the AP MLD 210 through the link Link(1) between the STA STA(1) (labeled "STA1" for brevity) and the AP AP(1). After the transition timeout interval has expired, the non-AP STA MLD 220 shall enable the EMLSR mode, and control all other affiliated STA(s) (e.g., the STA STA(2)) to transit to the active mode. For another example, as shown in the upper right part of FIG. 3, when trying to disable the EMLSR mode, the non-AP STA MLD 220 may send the EML OMN frame to the AP MLD 210 through the link Link(2) between the STA STA(2) (labeled "STA2" for brevity) and the AP AP(2). After the transition timeout interval has expired, the non-AP STA MLD 220 shall disable the EMLSR mode, and control all other affiliated STA(s) (e.g., the STA STA(1)) to transit to the power save mode. No matter whether the non-AP STA MLD 220 is trying to enable or disable the EMLSR mode, the non-AP STA MLD 220 may need a processing delay to enable/disable EMLSR mode, and more particularly, may not be able to perform transmitting (TX) or receiving (RX) operations during the processing delay. For example, the processing delay may exceed the transition timeout value announced by the AP MLD 210, so the non-AP STA MLD 220 may be unable to successfully receive a packet (e.g., an initial control frame (ICF) transmitted by the AP AP(1) after the transition timeout interval for initiating the downlink (DL) transmission opportunity (TXOP) with the EMLSR STA, in the case of enabling the EMLSR mode) from the AP MLD 210 in time and errors may occur due to failing to receive the packet, causing overall performance to be reduced.

Based on the protection period control scheme, the wireless transceiver device (e.g., the non-AP STA MLD 220) may send at least one protection indication in at least one communications frame from the wireless transceiver device to the other device (e.g., the AP MLD 210), and reserve at least one protection period with the aforementioned at least one protection indication to cover at least one processing delay, for performing the associated internal processing of the wireless transceiver device, in order to complete the mode switching in time. For example, as shown in the lower left part of FIG. 3, when trying to enable the EMLSR mode, the non-AP STA MLD 220 may send the EML OMN frame to the AP MLD 210 through the link Link(1) between the STA STA(1) and the AP AP(1), and reserve the protection periods 11 and 12 for the EMLSR mode change processing, such as a first EMLSR mode enablement operation and a second EMLSR mode enablement operation of the non-AP STA MLD 220 regarding the links Link(1) and Link(2), respectively. After the protection periods 11 and 12 have expired, the non-AP STA MLD 220 may have finished enabling the EMLSR mode to change the way of using some internal resources thereof, and may have controlled all other affiliated STA(s) (e.g., the STA STA(2)) to transit to the active mode, in order to start performing listening operations of the STAs STA(1) and STA(2) (respectively labeled "STA1" and "STA2" for brevity). For another example, as shown in the lower right part of FIG. 3, when trying to disable the EMLSR mode, the non-AP STA MLD 220 may send the EML OMN frame to the AP MLD 210 through the link Link(2) between the STA STA(2) and the AP AP(2), and reserve the protection periods 21 and 22 for the EMLSR mode change processing, such as a first EMLSR mode disablement operation and a second EMLSR mode disablement operation of the non-AP STA MLD 220 regarding the links Link(1) and Link(2), respectively. After the protection periods 21 and 22 have expired, the non-AP STA MLD 220 may have finished disabling the EMLSR mode to change the way of using some internal resources thereof, and may have controlled all other affiliated STA(s) (e.g., the STA STA(1)) to transit to the power save mode.

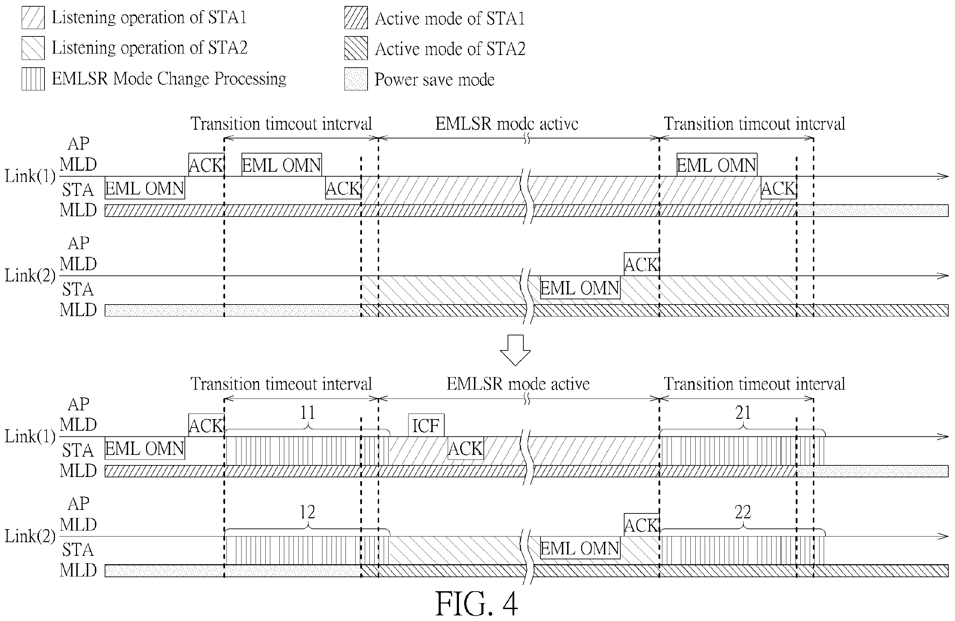

FIG. 4 illustrates, in the lower half part thereof, the protection period control scheme of the method according to another embodiment of the present invention, where a second non-protection control scheme may be illustrated in the upper half part of FIG. 4 for better comprehension. Based on the second non-protection control scheme, the non-AP STA MLD 220 (labeled "STA MLD" for brevity) may send an EML OMN frame (labeled "EML OMN" for brevity) to the AP MLD 210 when trying to enable/disable the EMLSR mode, and then receive the ACK for the EML OMN frame, and shall enable/disable the EMLSR mode after receiving an EML OMN frame from one of the affiliated APs (e.g., the APs AP(1) and AP(2)) operated on the EMLSR links Link(1) and Link(2), where the non-AP STA MLD 220 may receive the EML OMN frame from the one of the affiliated APs before the transition timeout interval indicated by the transition timeout value announced by the AP MLD 210 has expired. For example, as shown in the upper left part of FIG. 4, when trying to enable the EMLSR mode, the non-AP STA MLD 220 may send the EML OMN frame to the AP MLD 210 through the link Link(1) between the STA STA(1) (labeled "STA1" for brevity) and the AP AP(1). After receiving the EML OMN frame from the AP AP(1) and sending the corresponding ACK to the AP AP(1), the non-AP STA MLD 220 shall enable the EMLSR mode, and control all other affiliated STA(s) (e.g., the STA STA(2)) to transit to the active mode. For another example, as shown in the upper right part of FIG. 4, when trying to disable the EMLSR mode, the non-AP STA MLD 220 may send the EML OMN frame to the AP MLD 210 through the link Link(2) between the STA STA(2) (labeled "STA2" for brevity) and the AP AP(2). After receiving the EML OMN frame from the AP AP(1) and sending the corresponding ACK to the AP AP(1), the non-AP STA MLD 220 shall disable the EMLSR mode, and control all other affiliated STA(s) (e.g., the STA STA(1)) to transit to the power save mode. No matter whether the non-AP STA MLD 220 is trying to enable or disable the EMLSR mode, the non-AP STA MLD 220 may need a processing delay to enable/disable EMLSR mode, and more particularly, may not be able to perform TX or RX operations during the processing delay. For example, the processing delay may exceed the transition timeout value announced by the AP MLD 210, so the non-AP STA MLD 220 may be unable to successfully receive at least one packet (e.g., the EML OMN frame transmitted by the AP AP(1) within the transition timeout interval in any case among the case of enabling the EMLSR mode and the case of disabling the EMLSR mode, and an ICF transmitted by the AP AP(1) after the transition timeout interval in the case of enabling the EMLSR mode) sent by the AP AP(1)) from the AP MLD 210 in time and errors may occur due to failing to receive the aforementioned at least one packet, causing overall performance to be reduced.

Based on the protection period control scheme, the wireless transceiver device (e.g., the non-AP STA MLD 220) may send the aforementioned at least one protection indication in the aforementioned at least one communications frame from the wireless transceiver device to the other device (e.g., the AP MLD 210), and reserve the aforementioned at least one protection period with the aforementioned at least one protection indication to cover the aforementioned at least one processing delay, for performing the associated internal processing of the wireless transceiver device, in order to complete the mode switching in time. For example, as shown in the lower left part of FIG. 4, when trying to enable the EMLSR mode, the non-AP STA MLD 220 may send the EML OMN frame to the AP MLD 210 through the link Link(1) between the STA STA(1) and the AP AP(1), and reserve the protection periods 11 and 12 for the EMLSR mode change processing, such as the first EMLSR mode enablement operation and the second EMLSR mode enablement operation of the non-AP STA MLD 220 regarding the links Link(1) and Link(2), respectively. After the protection periods 11 and 12 have expired, the non-AP STA MLD 220 may have finished enabling the EMLSR mode to change the way of using some internal resources thereof, and may have controlled all other affiliated STA(s) (e.g., the STA STA(2)) to transit to the active mode, in order to start performing listening operations of the STAs STA(1) and STA(2) (respectively labeled "STA1" and "STA2" for brevity), and receive the ICF from the AP AP(1) afterward and send the corresponding ACK to the AP AP(1). For another example, as shown in the lower right part of FIG. 4, when trying to disable the EMLSR mode, the non-AP STA MLD 220 may send the EML OMN frame to the AP MLD 210 through the link Link(2) between the STA STA(2) and the AP AP(2), and reserve the protection periods 21 and 22 for the EMLSR mode change processing, such as the first EMLSR mode disablement operation and the second EMLSR mode disablement operation of the non-AP STA MLD 220 regarding the links Link(1) and Link(2), respectively. After the protection periods 21 and 22 have expired, the non-AP STA MLD 220 may have finished disabling the EMLSR mode to change the way of using some internal resources thereof, and may have controlled all other affiliated STA(s) (e.g., the STA STA(1)) to transit to the power save mode.

As shown in the embodiments shown in FIG. 3 and FIG. 4, the wireless transceiver device (e.g., the non-AP STA MLD 220) may send the aforementioned at least one protection indication in the aforementioned at least one communications frame from the wireless transceiver device to the other device (e.g., the AP MLD 210), for reserving the aforementioned at least one protection period. For example, the protection indication in the first communications frame may represent a first protection indication regarding a first link (e.g., the link Link(1)) among the multiple links, where the wireless transceiver device may send the first protection indication in the first communications frame from the wireless transceiver device to the other device, for enabling the protection of the first protection period (e.g., the protection periods 11 and/or 21) regarding the first link, in order to prevent the other device from communicating with the wireless transceiver device during the first protection period, and the associated operations of the mode switching procedure may further comprise:
(1) the wireless transceiver device (e.g., the non-AP STA MLD 220) may send a second protection indication in a second communications frame from the wireless transceiver device to the other device (e.g., the AP MLD 210) that informs the other device not to send any transmission request, for enabling protection of a second protection period (e.g., the protection periods 12 and/or 22) regarding a second link (e.g., the link Link(2)) among the multiple links; where the wireless transceiver device may determine the first protection indication and the second protection indication, respectively, but the present invention is not limited thereto. According to some embodiments, the first protection indication and the second protection indication may be integrated into a same protection indication.

**Table 1**

| **Frame Control Field** | | | | | | | | | | | | | | | |
|---|---|---|---|---|---|---|---|---|---|---|---|---|---|---|---|
| b0 | b1 | b2 | b3 | b4 | b5 | b6 | b7 | b8 | b9 | b10 | b11 | b12 | b13 | b14 | b15 |
| Protocol Version | | Type | | Subtype | | | | | | | | PM | | | |

Table 1 illustrates an example of multiple subfields of the frame control field of the medium access control (MAC) header in a communications frame, where the multiple subfields may comprise the Protocol Version subfield at the bits b1 and b0, the Type subfield at the bits b3 and b2, the Subtype subfield at the bits b7, b6, b5 and b4, the power management (PM) mode subfield (or PM subfield) at the bit b12, and some other subfields at other bits among the bits b0-b15, but the present invention is not limited thereto.

The first protection indication may comprise at least one indication of the following: a first NAV and a first power save mode indication. For example, the first protection indication may comprise the first NAV for indicating the first protection period determined by the wireless transceiver device (e.g., the non-AP STA MLD 220) in order to reserve the first protection period (e.g., any protection period among the protection periods 11 and 21) with the first NAV for performing first MLO mode change processing. For another example, the first protection indication may comprise the first power save mode indication (e.g., PM = 1, set in the PM subfield of the frame control field of the MAC header within the first communications frame) to inform the other device that the wireless transceiver device enters the power save mode, in order to reserve the first protection period (e.g., the protection periods 11 and/or 21) with the first power save mode indication for performing the first MLO mode change processing. In addition, the second protection indication may comprise at least one indication of the following: a second NAV and a second power save mode indication. For example, the second protection indication may comprise the second NAV for indicating the second protection period determined by the wireless transceiver device (e.g., the non-AP STA MLD 220) in order to reserve the second protection period (e.g., any protection period among the protection periods 12 and 22) with the second NAV for performing second MLO mode change processing. For another example, the second protection indication may comprise the second power save mode indication (e.g., PM = 1, set in the PM subfield of the frame control field of the MAC header within the second communications frame) to inform the other device that the wireless transceiver device enters the power save mode, in order to reserve the second protection period (e.g., the protection periods 12 and/or 22) with the second power save mode indication for performing the second MLO mode change processing.

When performing NAV protection regarding the link Link(x) with any NAV among the first NAV and the second NAV, the wireless transceiver device such as the non-AP STA MLD 220 (or the STA STA(x) thereof) can announce the aforementioned any NAV to protect the processing interval, and more particularly, prevent the AP MLD 210 from transmitting any DL frame to the non-AP STA MLD 220 via the link Link(x) during the protection period of the NAV protection, where the AP MLD 210 (or the AP AP(x) thereof) cannot begin the downlink transmission (DL TX) before the aforementioned any NAV expires. For example, if the STA's processing delay (e.g., the processing delay of the STA STA(x) within the non-AP STA MLD 220) is not greater than 32 milliseconds (ms), the non-AP STA MLD 220 (or the STA STA(x)) can perform the NAV protection regarding the link Link(x) with the aforementioned any NAV; otherwise, the non-AP STA MLD 220 (or the STA STA(x)) can transmit at least one extra NAV to the AP MLD 210 (or the AP AP(x)) to extend the protection period of the NAV protection, in order to perform the NAV protection regarding the link Link(x) with the aforementioned any NAV and the aforementioned at least one extra NAV. When performing power save protection regarding the link Link(x) with any power save mode indication among the first power save mode indication and the second power save mode indication, the wireless transceiver device such as the non-AP STA MLD 220 (or the STA STA(x)) can enter the power save mode during processing interval, and more particularly, prevent the AP MLD 210 from transmitting any DL frame to the non-AP STA MLD 220 via the link Link(x) during the protection period of the power save protection, where the AP MLD 210 (or the AP AP(x)) cannot begin the downlink transmission (DL TX) to the non-AP STA MLD 220 (or the STA STA(x)) actively after the non-AP STA MLD 220 (or the STA STA(x)) enters the power save mode.

**Table 2**

| Type value: | Type description | Subtype value: | Subtype description |
|---|---|---|---|
| b3 b2 | | b7 b6 b5 b4 | |
| 00 | Management | 1000 | Beacon |
| 00 | Management | 1010 | Disassociation |
| 01 | Control | 1010 | Block ACK |
| 01 | Control | 1011 | RTS |
| 01 | Control | 1101 | ACK |
| 10 | Data | 0000 | Data |
| 10 | Data | 0100 | Null (no data) |
| 10 | Data | 1000 | QoS Data |
| 10 | Data | 1100 | QoS Null (no data) |

Table 2 illustrates an example of multiple subtypes expressed with multiple combinations of the Subtype value (e.g., the value of the Subtype subfield at the bits b7, b6, b5 and b4) and the Type value (e.g., the value of the Type subfield at the bits b3 and b2) in the frame control field shown in Table 1, where there may be various kinds of management, control and data frames, and the frames corresponding to the multiple subtypes may comprise a beacon frame, a disassociation, a block ACK frame, a request-to-send (RTS) frame, an ACK frame, a data frame, a null (or no data) frame, a quality-of-service (QoS) data frame and a QoS null (or no data) frame, but the present invention is not limited thereto. According to some embodiments, the frames corresponding to the multiple subtypes may further comprise a clear-to-send (CTS) frame. For example, if the CTS frame is a response to an RTS frame, the value of the receiver address (RA) field of the CTS frame may be set to the address from the transmitter address (TA) field of the RTS frame with the Individual/Group bit set to 0. For another example, if the CTS frame is the first frame in a frame exchange, the RA field may be set to the MAC address of the transmitter.

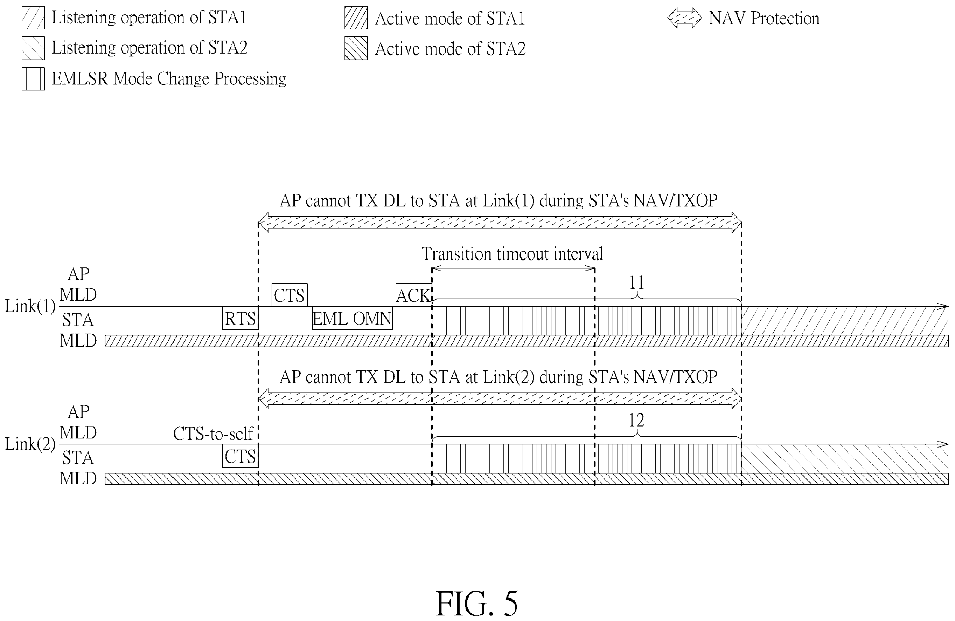

FIG. 5 is a diagram illustrating a first EMLSR enablement control scheme of the method according to an embodiment of the present invention. The wireless transceiver device such as the non-AP STA MLD 220 may perform the NAV protection regarding the link Link(1) with the first protection indication such as the first NAV to prevent the AP MLD 210 from transmitting any DL frame to the non-AP STA MLD 220 via the link Link(1) during the first protection period (labeled "AP cannot TX DL to STA at Link(1) during STA's NAV/TXOP" for brevity), and perform the NAV protection regarding the link Link(2) with the second protection indication such as the second NAV to prevent the AP MLD 210 from transmitting any DL frame to the non-AP STA MLD 220 via the link Link(2) during the second protection period (labeled "AP cannot TX DL to STA at Link(2) during STA's NAV/TXOP" for brevity). For example, the wireless transceiver device (e.g., the non-AP STA MLD 220) may send the first communications frame (e.g., an RTS frame) carrying the first NAV to reserve the first protection period (e.g., at least the protection period 11, such as a greater protection period comprising the protection period 11) with the first NAV for performing the EMLSR mode change processing such as the first EMLSR mode enablement operation, regarding the link Link(1). In addition, the wireless transceiver device (e.g., the non-AP STAMLD 220) may send the second communications frame (e.g., a CTS frame such as a CTS-to-self frame) carrying the second NAV to reserve the second protection period (e.g., at least the protection period 12, such as a greater protection period comprising the protection period 12) with the second NAV for performing the EMLSR mode change processing such as the second EMLSR mode enablement operation, regarding the second link such as the link Link(2). For brevity, similar descriptions for this embodiment are not repeated in detail here.

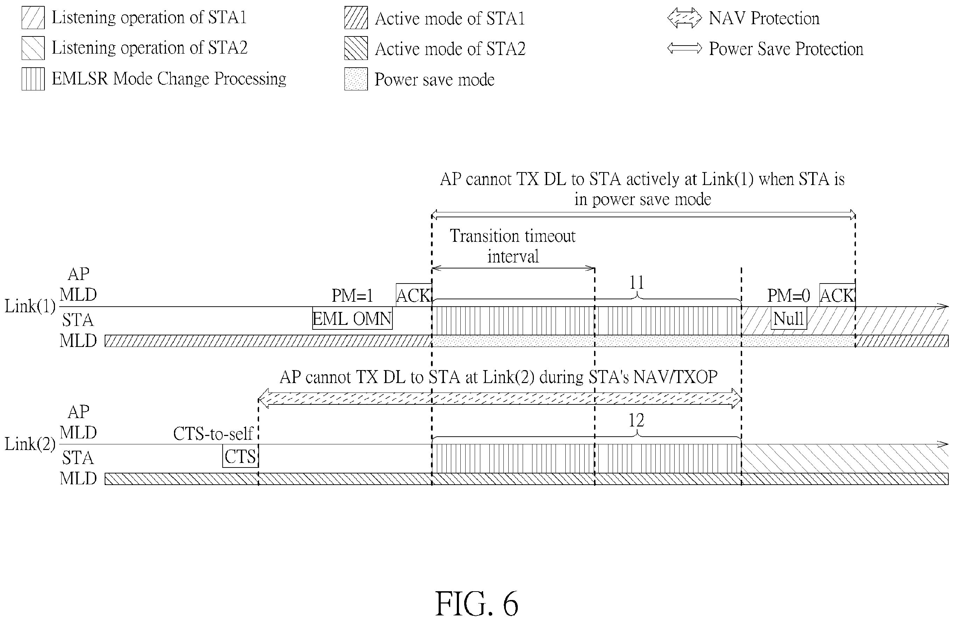

FIG. 6 is a diagram illustrating a second EMLSR enablement control scheme of the method according to an embodiment of the present invention. The wireless transceiver device such as the non-AP STA MLD 220 may perform the power save protection regarding the link Link(1) with the first protection indication such as the first power save mode indication to prevent the AP MLD 210 from transmitting any DL frame to the non-AP STA MLD 220 via the link Link(1) during the first protection period (labeled "AP cannot TX DL to STA actively at Link(1) when STA is in power save mode" for brevity), and perform the NAV protection regarding the link Link(2) with the second protection indication such as the second NAV to prevent the AP MLD 210 from transmitting any DL frame to the non-AP STA MLD 220 via the link Link(2) during the second protection period (labeled "AP cannot TX DL to STA at Link(2) during STA's NAV/TXOP" for brevity). For example, the wireless transceiver device (e.g., the non-AP STA MLD 220) may send the first communications frame (e.g., the EML OMN frame) carrying the first power save mode indication (e.g., PM = 1) for indicating that the wireless transceiver device enters the power save mode, to start reserving the first protection period (e.g., at least the protection period 11, such as a greater protection period comprising the protection period 11) with the first power save mode indication for performing the EMLSR mode change processing such as the first EMLSR mode enablement operation, and may further send another first communications frame such as a null frame (labeled "Null" for brevity) to the other device (e.g., the AP MLD 210), and more particularly, send another first power save mode indication (e.g., PM = 0, set in the PM subfield of the frame control field of the MAC header) carried by the other first communications frame to inform the other device that the wireless transceiver device has left the power save mode, for disabling the protection of the first protection period (e.g., at least the protection period 11). In addition, the wireless transceiver device (e.g., the non-AP STA MLD 220) may send the second communications frame (e.g., a CTS frame such as a CTS-to-self frame) carrying the second NAV to reserve the second protection period (e.g., at least the protection period 12, such as a greater protection period comprising the protection period 12) with the second NAV for performing the EMLSR mode change processing such as the second EMLSR mode enablement operation, regarding the second link such as the link Link(2). For brevity, similar descriptions for this embodiment are not repeated in detail here.

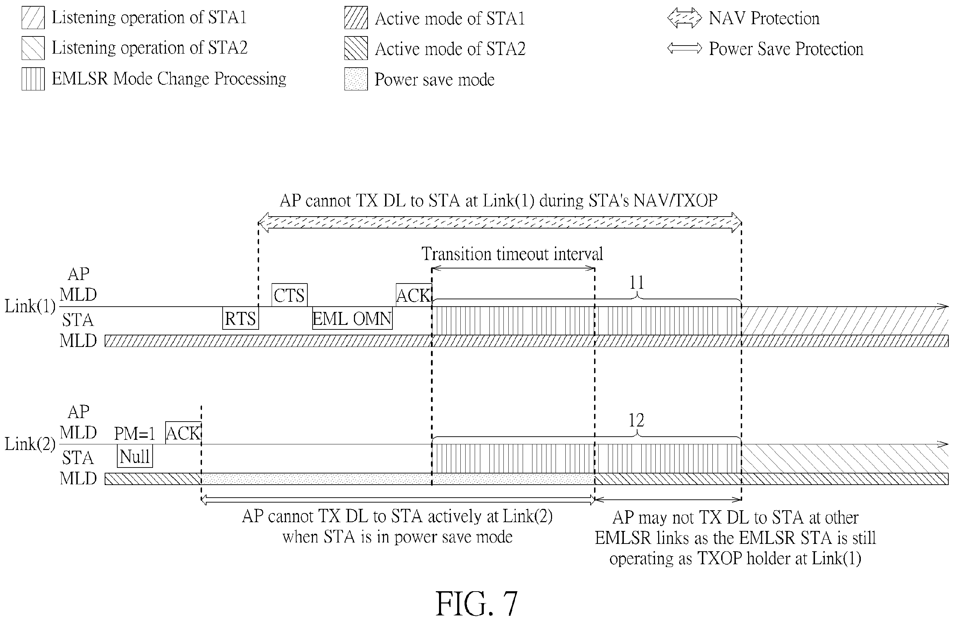

FIG. 7 is a diagram illustrating a third EMLSR enablement control scheme of the method according to an embodiment of the present invention. The wireless transceiver device such as the non-AP STA MLD 220 may perform the NAV protection regarding the link Link(1) with the first protection indication such as the first NAV to prevent the AP MLD 210 from transmitting any DL frame to the non-AP STA MLD 220 via the link Link(1) during the first protection period (labeled "AP cannot TX DL to STA at Link(1) during STA's NAV/TXOP" for brevity), and perform the power save protection regarding the link Link(2) with the second protection indication such as the second power save mode indication to prevent the AP MLD 210 from transmitting any DL frame to the non-AP STA MLD 220 via the link Link(2) during the second protection period (labeled "AP cannot TX DL to STA actively at Link(2) when STA is in power save mode" for brevity). For example, the wireless transceiver device (e.g., the non-AP STA MLD 220) may send the first communications frame (e.g., an RTS frame) carrying the first NAV to reserve the first protection period (e.g., at least the protection period 11, such as a greater protection period comprising the protection period 11) with the first NAV for performing the EMLSR mode change processing such as the first EMLSR mode enablement operation, regarding the link Link(1). In addition, the wireless transceiver device (e.g., the non-AP STA MLD 220) may send the second communications frame (e.g., a null frame) carrying the second power save mode indication (e.g., PM = 1) for indicating that the wireless transceiver device enters the power save mode, to start reserving the second protection period (e.g., at least the protection period 12, such as a greater protection period comprising the protection period 12) with the second power save mode indication for performing the EMLSR mode change processing such as the second EMLSR mode enablement operation. As the non-AP STA MLD 220 is still operating as the TXOP holder at the link Link(1) during a subsequent interval coming after the transaction timeout interval, the AP MLD 210 may not transmit any DL frame to the non-AP STA MLD 220 via other EMLSR link(s) such as the link Link(2) during the subsequent interval (labeled "AP may not TX DL to STA at other EMLSR links as the EMLSR STA is still operating as TXOP holder at Link(1)" for brevity). For brevity, similar descriptions for this embodiment are not repeated in detail here.

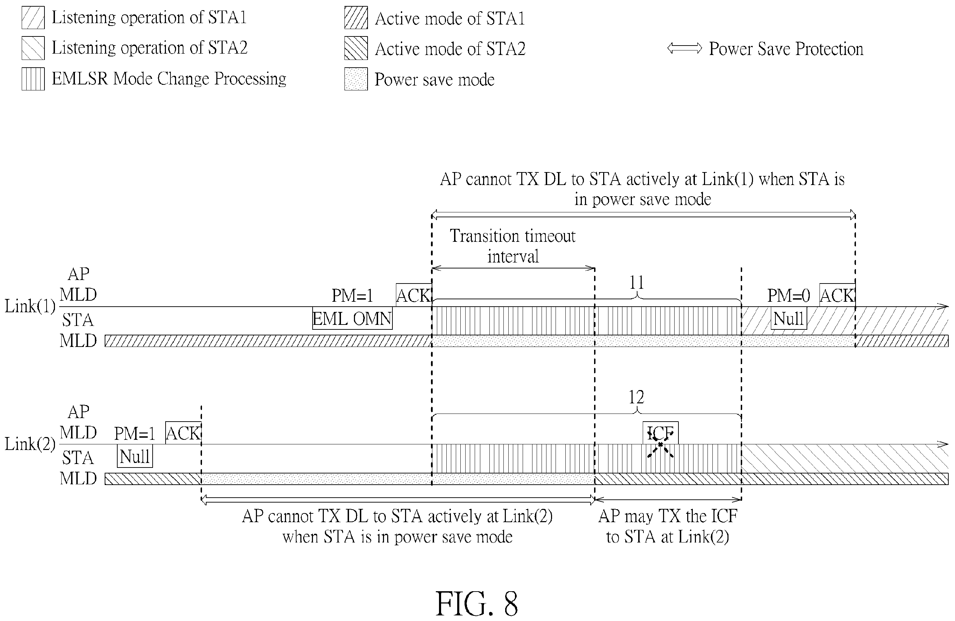

FIG. 8 is a diagram illustrating a fourth EMLSR enablement control scheme of the method according to an embodiment of the present invention. The wireless transceiver device such as the non-AP STA MLD 220 may perform the power save protection regarding the link Link(1) with the first protection indication such as the first power save mode indication to prevent the AP MLD 210 from transmitting any DL frame to the non-AP STA MLD 220 via the link Link(1) during the first protection period (labeled "AP cannot TX DL to STA actively at Link(1) when STA is in power save mode" for brevity), and perform the power save protection regarding the link Link(2) with the second protection indication such as the second power save mode indication to prevent the AP MLD 210 from transmitting any DL frame to the non-AP STA MLD 220 via the link Link(2) during the second protection period (labeled "AP cannot TX DL to STA actively at Link(2) when STA is in power save mode" for brevity). For example, the wireless transceiver device (e.g., the non-AP STA MLD 220) may send the first communications frame (e.g., the EML OMN frame) carrying the first power save mode indication (e.g., PM = 1) for indicating that the wireless transceiver device enters the power save mode, to start reserving the first protection period (e.g., at least the protection period 11, such as a greater protection period comprising the protection period 11) with the first power save mode indication for performing the EMLSR mode change processing such as the first EMLSR mode enablement operation, and may further send another first communications frame such as a null frame (labeled "Null" for brevity) to the other device (e.g., the AP MLD 210), and more particularly, send another first power save mode indication (e.g., PM = 0, set in the PM subfield of the frame control field of the MAC header) carried by the other first communications frame to inform the other device that the wireless transceiver device has left the power save mode, for disabling the protection of the first protection period (e.g., the protection periods 11). In addition, the wireless transceiver device (e.g., the non-AP STA MLD 220) may send the second communications frame (e.g., a null frame) carrying the second power save mode indication (e.g., PM = 1) for indicating that the wireless transceiver device enters the power save mode, to start reserving the second protection period (e.g., at least the protection period 12, such as a greater protection period comprising the protection period 12) with the second power save mode indication for performing the EMLSR mode change processing such as the second EMLSR mode enablement operation. For brevity, similar descriptions for this embodiment are not repeated in detail here.

It is suggested to apply the fourth EMLSR enablement control scheme in a situation where the STA processing delay (e.g., the processing delay of the non-AP STA MLD 220) is less than the transition timeout interval. For example, if the STA processing delay is greater than the transition timeout interval, the AP MLD 210 may begin transmitting an ICF to the non-AP STA MLD 220 via the link Link(2) after the transition timeout interval (labeled "AP may TX the ICF to STA at Link(2)" for brevity); otherwise, the non-AP STA MLD 220 may perform the power save protection regarding the links Link(1) and Link(2) with the first power save mode indication and the second power save mode indication, respectively, without the problem of failing to receive the ICF (labeled "X" depicted with dashed lines for brevity).

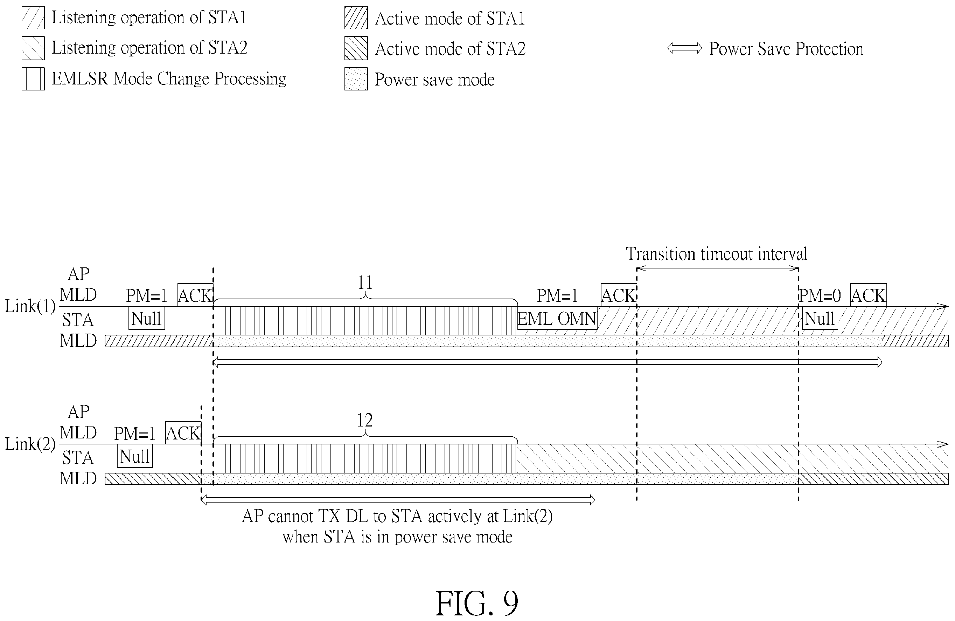

FIG. 9 is a diagram illustrating a fifth EMLSR enablement control scheme of the method according to an embodiment of the present invention. In comparison with the embodiment shown in FIG. 8, the wireless transceiver device (e.g., the non-AP STA MLD 220) of this embodiment may start performing the power save protection regarding the links Link(1) and Link(2) before sending the EML OMN frame to the AP MLD 210, and more particularly, finish the EMLSR mode change processing first, and transmit the EML OMN frame to the AP MLD 210 after entering the EMLSR mode. For example, the wireless transceiver device (e.g., the non-AP STA MLD 220) may send the first communications frame (e.g., a null frame) carrying the first power save mode indication (e.g., PM = 1) for indicating that the wireless transceiver device enters the power save mode, to start reserving the first protection period (e.g., at least the protection period 11, such as a greater protection period comprising the protection period 11) with the first power save mode indication for performing the EMLSR mode change processing such as the first EMLSR mode enablement operation, and send the EML OMN frame still carrying the first power save mode indication (e.g., PM = 1) afterward, and may further send another first communications frame such as a null frame (labeled "Null" for brevity) to the other device (e.g., the AP MLD 210), and more particularly, send another first power save mode indication (e.g., PM = 0, set in the PM subfield of the frame control field of the MAC header) carried by the other first communications frame to inform the other device that the wireless transceiver device has left the power save mode, for disabling the protection of the first protection period (e.g., the protection periods 11). In addition, the wireless transceiver device (e.g., the non-AP STA MLD 220) may send the second communications frame (e.g., a null frame) carrying the second power save mode indication (e.g., PM = 1) for indicating that the wireless transceiver device enters the power save mode, to start reserving the second protection period (e.g., at least the protection period 12, such as a greater protection period comprising the protection period 12) with the second power save mode indication for performing the EMLSR mode change processing such as the second EMLSR mode enablement operation. For brevity, similar descriptions for this embodiment are not repeated in detail here.

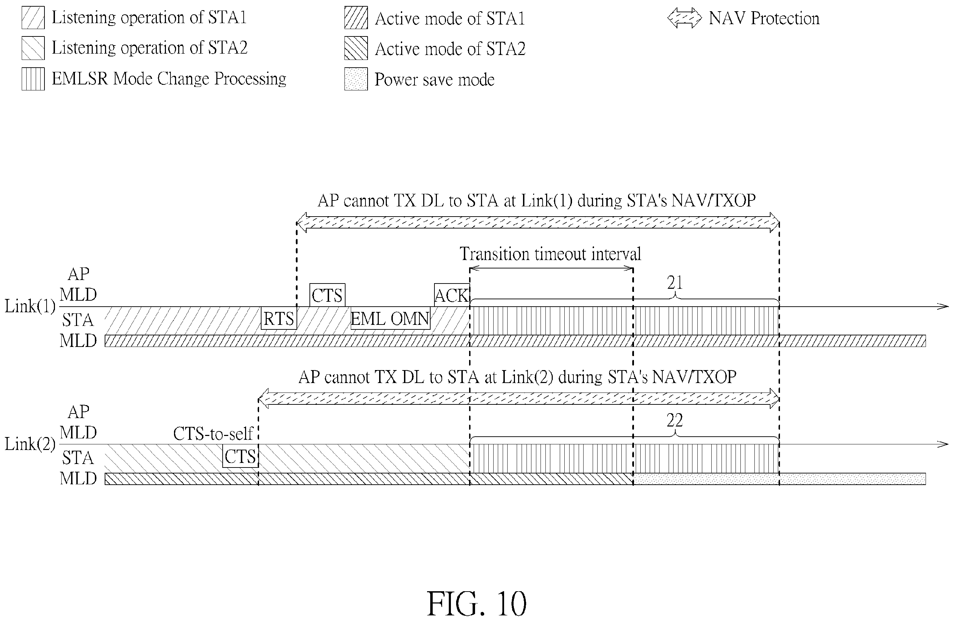

FIG. 10 is a diagram illustrating a first EMLSR disablement control scheme of the method according to an embodiment of the present invention. The wireless transceiver device such as the non-AP STA MLD 220 may perform the NAV protection regarding the link Link(1) with the first protection indication such as the first NAV to prevent the AP MLD 210 from transmitting any DL frame to the non-AP STA MLD 220 via the link Link(1) during the first protection period (labeled "AP cannot TX DL to STA at Link(1) during STA's NAV/TXOP" for brevity), and perform the NAV protection regarding the link Link(2) with the second protection indication such as the second NAV to prevent the AP MLD 210 from transmitting any DL frame to the non-AP STA MLD 220 via the link Link(2) during the second protection period (labeled "AP cannot TX DL to STA at Link(2) during STA's NAV/TXOP" for brevity). For example, the wireless transceiver device (e.g., the non-AP STA MLD 220) may send the first communications frame (e.g., an RTS frame) carrying the first NAV to reserve the first protection period (e.g., at least the protection period 21, such as a greater protection period comprising the protection period 21) with the first NAV for performing the EMLSR mode change processing such as the first EMLSR mode disablement operation, regarding the link Link(1). In addition, the wireless transceiver device (e.g., the non-AP STAMLD 220) may send the second communications frame (e.g., a CTS frame such as a CTS-to-self frame) carrying the second NAV to reserve the second protection period (e.g., at least the protection period 22, such as a greater protection period comprising the protection period 22) with the second NAV for performing the EMLSR mode change processing such as the second EMLSR mode disablement operation, regarding the second link such as the link Link(2). For brevity, similar descriptions for this embodiment are not repeated in detail here.

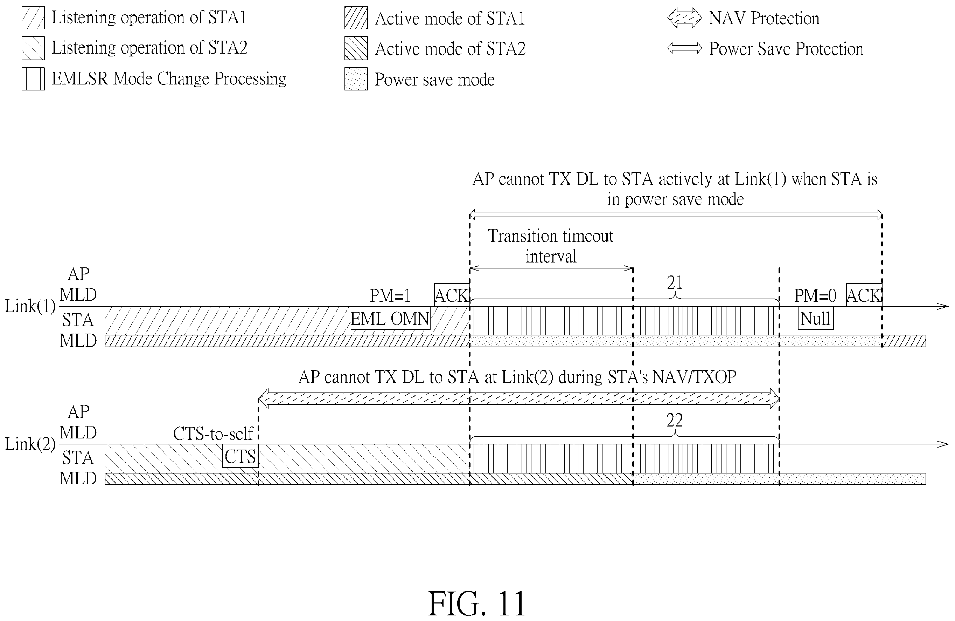

FIG. 11 is a diagram illustrating a second EMLSR disablement control scheme of the method according to an embodiment of the present invention. The wireless transceiver device such as the non-AP STA MLD 220 may perform the power save protection regarding the link Link(1) with the first protection indication such as the first power save mode indication to prevent the AP MLD 210 from transmitting any DL frame to the non-AP STA MLD 220 via the link Link(1) during the first protection period (labeled "AP cannot TX DL to STA actively at Link(1) when STA is in power save mode" for brevity), and perform the NAV protection regarding the link Link(2) with the second protection indication such as the second NAV to prevent the AP MLD 210 from transmitting any DL frame to the non-AP STA MLD 220 via the link Link(2) during the second protection period (labeled "AP cannot TX DL to STA at Link(2) during STA's NAV/TXOP" for brevity). For example, the wireless transceiver device (e.g., the non-AP STA MLD 220) may send the first communications frame (e.g., the EML OMN frame) carrying the first power save mode indication (e.g., PM = 1) for indicating that the wireless transceiver device enters the power save mode, to start reserving the first protection period (e.g., at least the protection period 21, such as a greater protection period comprising the protection period 21) with the first power save mode indication for performing the EMLSR mode change processing such as the first EMLSR mode disablement operation, and may further send another first communications frame such as a null frame (labeled "Null" for brevity) to the other device (e.g., the AP MLD 210), and more particularly, send another first power save mode indication (e.g., PM = 0, set in the PM subfield of the frame control field of the MAC header) carried by the other first communications frame to inform the other device that the wireless transceiver device has left the power save mode, for disabling the protection of the first protection period (e.g., at least the protection period 21). In addition, the wireless transceiver device (e.g., the non-AP STA MLD 220) may send the second communications frame (e.g., a CTS frame such as a CTS-to-self frame) carrying the second NAV to reserve the second protection period (e.g., at least the protection period 22, such as a greater protection period comprising the protection period 22) with the second NAV for performing the EMLSR mode change processing such as the second EMLSR mode disablement operation, regarding the second link such as the link Link(2). For brevity, similar descriptions for this embodiment are not repeated in detail here.

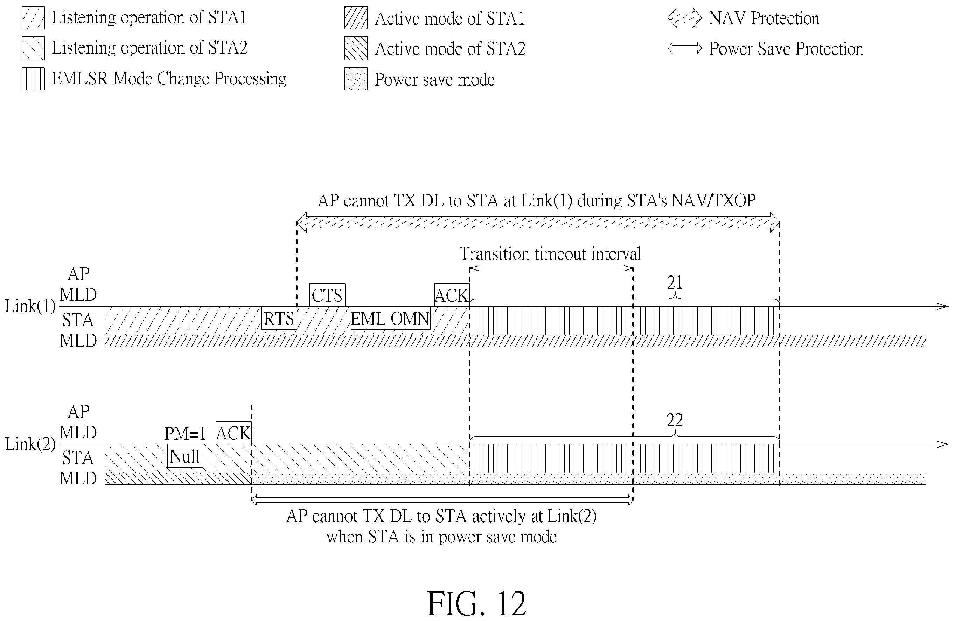

FIG. 12 is a diagram illustrating a third EMLSR disablement control scheme of the method according to an embodiment of the present invention. The wireless transceiver device such as the non-AP STA MLD 220 may perform the NAV protection regarding the link Link(1) with the first protection indication such as the first NAV to prevent the AP MLD 210 from transmitting any DL frame to the non-AP STA MLD 220 via the link Link(1) during the first protection period (labeled "AP cannot TX DL to STA at Link(1) during STA's NAV/TXOP" for brevity), and perform the power save protection regarding the link Link(2) with the second protection indication such as the second power save mode indication to prevent the AP MLD 210 from transmitting any DL frame to the non-AP STA MLD 220 via the link Link(2) during the second protection period (labeled "AP cannot TX DL to STA actively at Link(2) when STA is in power save mode" for brevity). For example, the wireless transceiver device (e.g., the non-AP STA MLD 220) may send the first communications frame (e.g., an RTS frame) carrying the first NAV to reserve the first protection period (e.g., at least the protection period 21, such as a greater protection period comprising the protection period 21) with the first NAV for performing the EMLSR mode change processing such as the first EMLSR mode disablement operation, regarding the link Link(1). In addition, the wireless transceiver device (e.g., the non-AP STA MLD 220) may send the second communications frame (e.g., a null frame) carrying the second power save mode indication (e.g., PM = 1) for indicating that the wireless transceiver device enters the power save mode, to start reserving the second protection period (e.g., at least the protection period 22, such as a greater protection period comprising the protection period 22) with the second power save mode indication for performing the EMLSR mode change processing such as the second EMLSR mode disablement operation. For brevity, similar descriptions for this embodiment are not repeated in detail here.

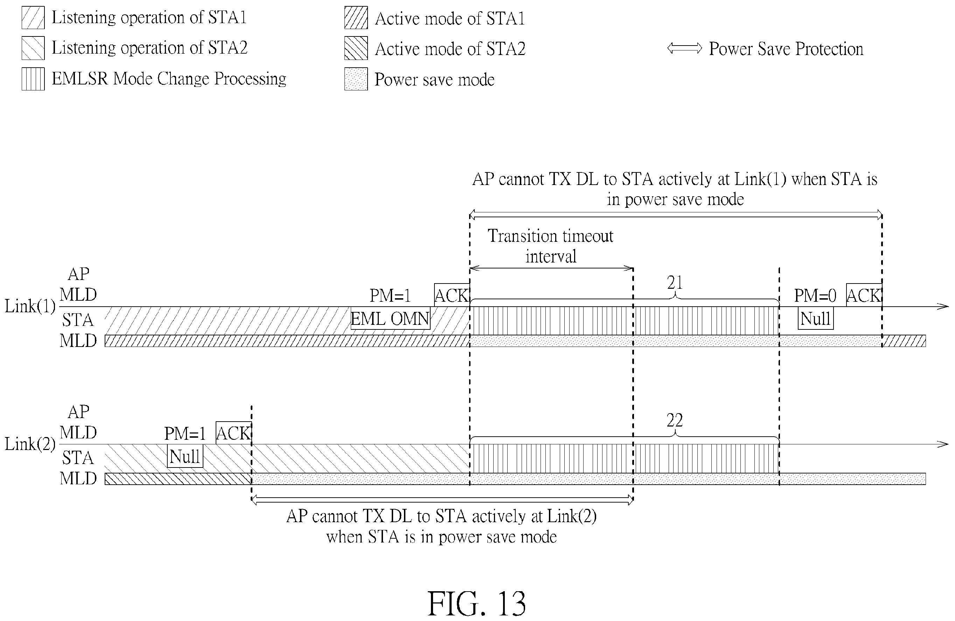

FIG. 13 is a diagram illustrating a fourth EMLSR disablement control scheme of the method according to an embodiment of the present invention. The wireless transceiver device such as the non-AP STA MLD 220 may perform the power save protection regarding the link Link(1) with the first protection indication such as the first power save mode indication to prevent the AP MLD 210 from transmitting any DL frame to the non-AP STA MLD 220 via the link Link(1) during the first protection period (labeled "AP cannot TX DL to STA actively at Link(1) when STA is in power save mode" for brevity), and perform the power save protection regarding the link Link(2) with the second protection indication such as the second power save mode indication to prevent the AP MLD 210 from transmitting any DL frame to the non-AP STA MLD 220 via the link Link(2) during the second protection period (labeled "AP cannot TX DL to STA actively at Link(2) when STA is in power save mode" for brevity). For example, the wireless transceiver device (e.g., the non-AP STA MLD 220) may send the first communications frame (e.g., the EML OMN frame) carrying the first power save mode indication (e.g., PM = 1) for indicating that the wireless transceiver device enters the power save mode, to start reserving the first protection period (e.g., at least the protection period 21, such as a greater protection period comprising the protection period 21) with the first power save mode indication for performing the EMLSR mode change processing such as the first EMLSR mode disablement operation, and may further send another first communications frame such as a null frame (labeled "Null" for brevity) to the other device (e.g., the AP MLD 210), and more particularly, send another first power save mode indication (e.g., PM = 0, set in the PM subfield of the frame control field of the MAC header) carried by the other first communications frame to inform the other device that the wireless transceiver device has left the power save mode, for disabling the protection of the first protection period (e.g., the protection period 21). In addition, the wireless transceiver device (e.g., the non-AP STAMLD 220) may send the second communications frame (e.g., a null frame) carrying the second power save mode indication (e.g., PM = 1) for indicating that the wireless transceiver device enters the power save mode, to start reserving the second protection period (e.g., at least the protection period 22, such as a greater protection period comprising the protection period 22) with the second power save mode indication for performing the EMLSR mode change processing such as the second EMLSR mode disablement operation. For brevity, similar descriptions for this embodiment are not repeated in detail here.

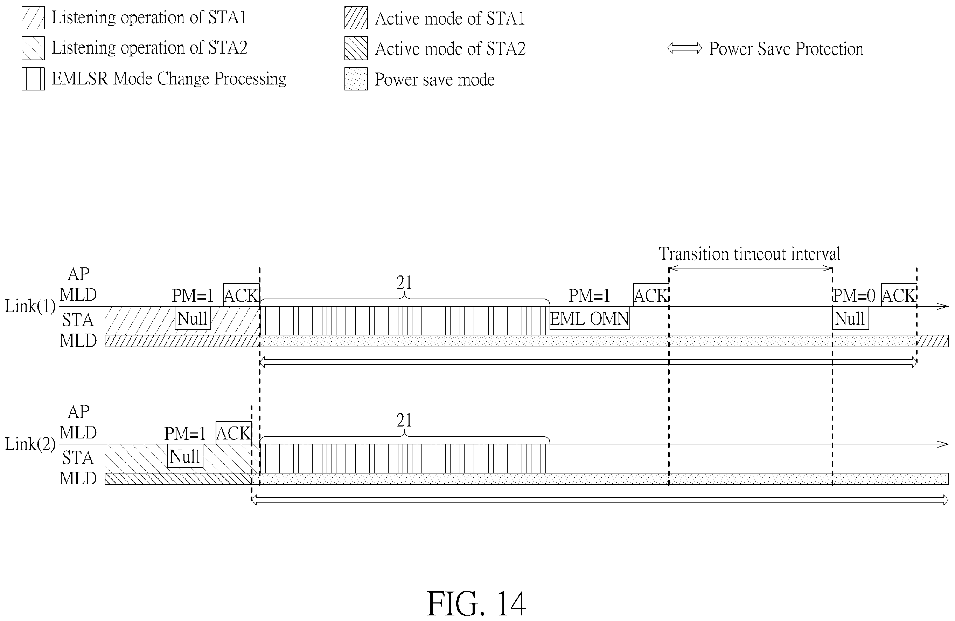

FIG. 14 is a diagram illustrating a fifth EMLSR disablement control scheme of the method according to an embodiment of the present invention. In comparison with the embodiment shown in FIG. 13, the wireless transceiver device (e.g., the non-AP STA MLD 220) of this embodiment may start performing the power save protection regarding the links Link(1) and Link(2) before sending the EML OMN frame to the AP MLD 210, and more particularly, finish the EMLSR mode change processing first, and transmit the EML OMN frame to the AP MLD 210 after leaving or exiting the EMLSR mode. For example, the wireless transceiver device (e.g., the non-AP STA MLD 220) may send the first communications frame (e.g., a null frame) carrying the first power save mode indication (e.g., PM = 1) for indicating that the wireless transceiver device enters the power save mode, to start reserving the first protection period (e.g., at least the protection period 21, such as a greater protection period comprising the protection period 21) with the first power save mode indication for performing the EMLSR mode change processing such as the first EMLSR mode disablement operation, and send the EML OMN frame still carrying the first power save mode indication (e.g., PM = 1) afterward, and may further send another first communications frame such as a null frame (labeled "Null" for brevity) to the other device (e.g., the AP MLD 210), and more particularly, send another first power save mode indication (e.g., PM = 0, set in the PM subfield of the frame control field of the MAC header) carried by the other first communications frame to inform the other device that the wireless transceiver device has left the power save mode, for disabling the protection of the first protection period (e.g., the protection period 21). In addition, the wireless transceiver device (e.g., the non-AP STA MLD 220) may send the second communications frame (e.g., a null frame) carrying the second power save mode indication (e.g., PM = 1) for indicating that the wireless transceiver device enters the power save mode, to start reserving the second protection period (e.g., at least the protection period 22, such as a greater protection period comprising the protection period 22) with the second power save mode indication for performing the EMLSR mode change processing such as the second EMLSR mode disablement operation. For brevity, similar descriptions for this embodiment are not repeated in detail here.

According to some embodiments, the wireless transceiver device (e.g., the non-AP STA MLD 220) may selectively send another first NAV in another first communications frame to the other device (e.g., the AP MLD 210) once the first protection period ends, so that a next protection period (e.g., the next protection period coming after the first protection period to be a continuation of the first protection period) starts for the mode switching procedure, for continuing enabling the protection of the first protection period (e.g., any protection period among the protection periods 11 and 21). For example, if the first NAV is insufficient for reserving the first protection period, the wireless transceiver device (e.g., the non-AP STA MLD 220) may send the other first NAV in the other first communications frame; otherwise, the wireless transceiver device may avoid sending the other first NAV in the other first communications frame. In addition, the wireless transceiver device (e.g., the non-AP STA MLD 220) may selectively send another second NAV in another second communications frame to the other device (e.g., the AP MLD 210) once the second protection period ends, so that a next protection period (e.g., the next protection period coming after the second protection period to be a continuation of the second protection period) starts for the mode switching procedure, for continuing enabling the protection of the second protection period (e.g., any protection period among the protection periods 12 and 22). For example, if the second NAV is insufficient for reserving the second protection period, the wireless transceiver device (e.g., the non-AP STA MLD 220) may send the other second NAV in the other second communications frame; otherwise, the wireless transceiver device may avoid sending the other second NAV in the other second communications frame. For brevity, similar descriptions for these embodiments are not repeated in detail here.

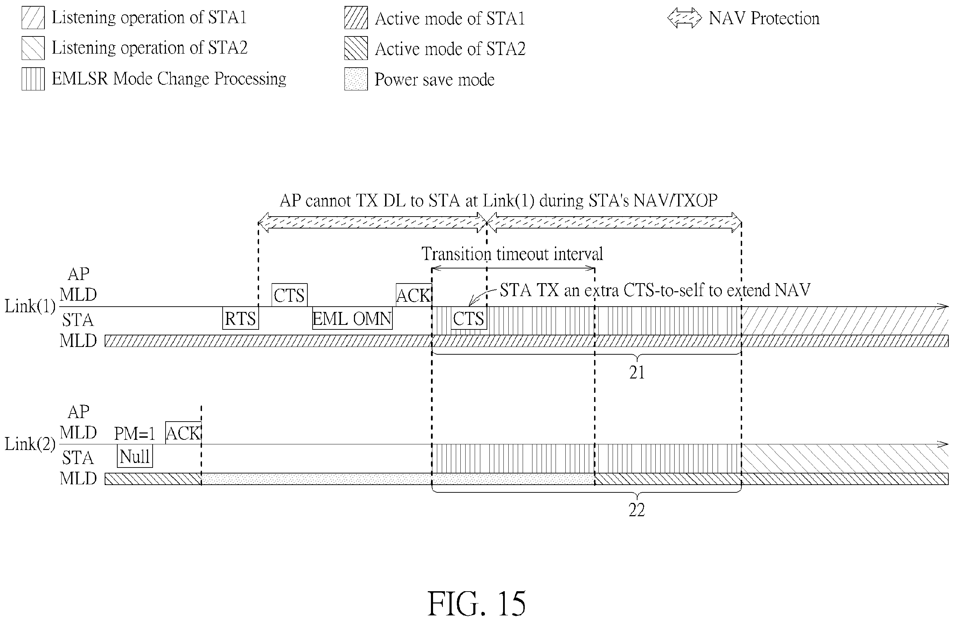

FIG. 15 is a diagram illustrating another EMLSR enablement control scheme of the method according to an embodiment of the present invention. For example, as the first NAV is insufficient for reserving the first protection period (e.g., the protection period 21), the wireless transceiver device (e.g., the non-AP STA MLD 220) may send the other first NAV in the other first communications frame from the wireless transceiver device to the other device (e.g., the AP MLD 210), for continuing enabling the protection of the first protection period. For brevity, similar descriptions for this embodiment are not repeated in detail here.

According to some embodiments, for the second case that the protection of the first protection period is enabled before executing the mode switching procedure, the wireless transceiver device (e.g., the non-AP STA MLD 220) may perform the information exchange with the other device (e.g., the AP MLD 210) to notify the other device of the wireless transceiver device's own capability/capabilities through at least one capability indication in advance. The capability/capabilities mentioned above may comprise a processing delay capability regarding the mode switching, and the aforementioned at least one capability indication may comprise a proprietary element. The wireless transceiver device (e.g., the non-AP STA MLD 220) may carry the mode switch processing delay in the proprietary element, and use the proprietary element to notify the other device (e.g., the AP MLD 210) of the mode switch processing delay as the first protection period during the information exchange, in order to reserve the first protection period . In addition, the proprietary element may conform to a predetermined proprietary element format, and the predetermined proprietary element format may comprise an element identifier (ID) and at least one time indication. For example, the aforementioned at least one time indication may comprise one or a combination of a mode enter processing delay time and a mode exit processing delay time of the predetermined MLO-related mode (e.g., the EMLSR mode).

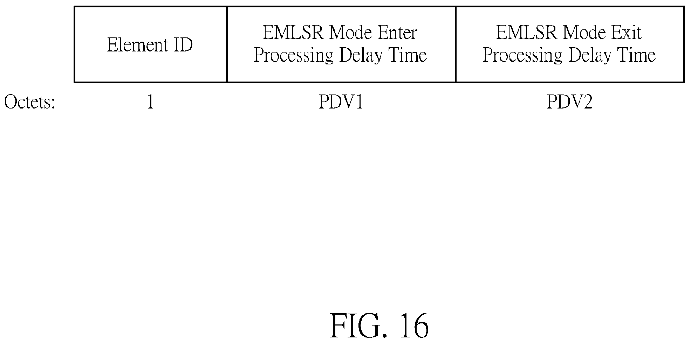

FIG. 16 is a diagram illustrating an EMLSR enablement and disablement control scheme of the method according to an embodiment of the present invention, where the proprietary element format shown in FIG. 16 may be taken as the predetermined proprietary element format mentioned above. The aforementioned at least one time indication may comprise both of the mode enter processing delay time and the mode exit processing delay time of the predetermined MI,O-related mode (e.g., the EMLSR mode). For example, the length of the element identifier ID may be equal to one octet such as one byte, and the lengths of the mode enter processing delay time and the mode exit processing delay time equal to a first predetermined value PDV1 and a second predetermined value PDV2 (measured in unit of octets or bytes), respectively. For brevity, similar descriptions for this embodiment are not repeated in detail here.

In the embodiment shown in FIG. 16, the EMLSR mode may be taken as an example of the predetermined MI,O-related mode, but the present invention is not limited thereto. According to some embodiments, the EMLMR mode may be taken as an example of the predetermined MLO-related mode, where the EMLSR mode enter processing delay time and the EMLSR mode exit processing delay time shown in FIG. 16 may be replaced by the EMLMR mode enter processing delay time and the EMI,MR mode exit processing delay time, respectively. In addition, regarding the predetermined MI,O-related mode such as the EMI,MR mode, the set of EMLSR links may be replaced by the set of EMI,MR links. For brevity, similar descriptions for these embodiments are not repeated in detail here.

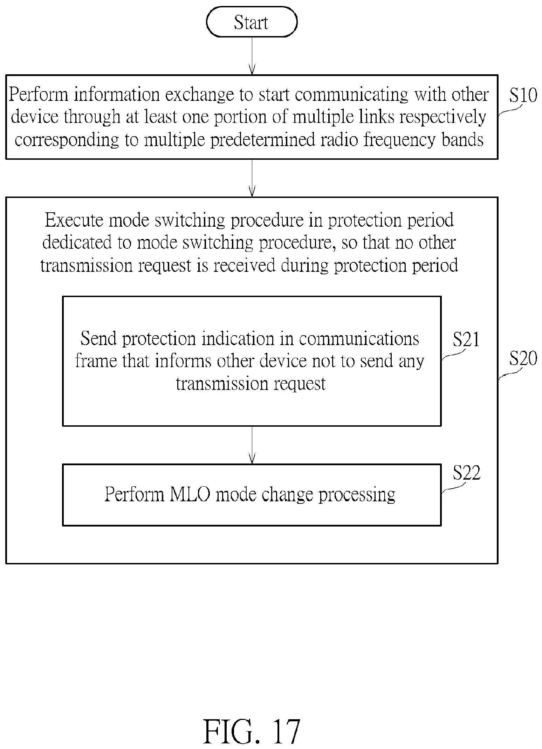

FIG. 17 illustrates a working flow of the method according to an embodiment of the present invention, where the method may be applied to the aforementioned any wireless transceiver device within the wireless communications system 100 shown in FIG. 1. For example, in the operations of Steps S10 and S20, the wireless transceiver device may represent the STA device 120 such as the non-AP STA MLD 220, and the other device may represent the AP device 110 such as the AP MLD 210, but the present invention is not limited thereto.

In Step S10, the wireless transceiver device (e.g., the non-AP STA MLD 220) may perform information exchange to start communicate with the other device (e.g., the AP MLD 210) within the wireless communications system 100 through at least one portion (e.g., a portion or all) of the multiple links respectively corresponding to the multiple predetermined radio frequency bands. For example, the multiple links may represent the multiple MLD links (e.g., the links Link(1), Link(2) and Link(3) respectively corresponding to the predetermined radio frequency bands RFB(1), RFB(2) and RFB(3) as illustrated in FIG. 2).

In Step S20, the wireless transceiver device (e.g., the non-AP STA MLD 220) may execute the mode switching procedure regarding the predetermined MI,O-related mode (e.g., the EMLSR mode or the EMLMR mode) in the aforementioned at least one protection period dedicated to the mode switching procedure, so that no other transmission request is received during the aforementioned at least one protection period, where any protection period among the aforementioned at least one protection period may be equal to or longer than the time spent on executing the mode switching. For example, for the first case that the protection of the first protection period is enabled during the mode switching procedure, Step S20 may comprise multiple sub-steps such as Steps S21 and S22, and the mode switching procedure may comprise the operations of Steps S21 and S22, but the present invention is not limited thereto.

In Step S21, the wireless transceiver device (e.g., the non-AP STA MLD 220) may send the aforementioned at least one protection indication in the aforementioned at least one communications frame from the wireless transceiver device to the other device (e.g., the AP MLD 210) that informs the other device not to send any transmission request.

In Step S22, the wireless transceiver device (e.g., the non-AP STA MLD 220) may perform the MLO mode change processing.

For example, the set of EMLSR/EMLMR links may comprise the first link and the second link (e.g., the links Link(1) and Link(2)), where the aforementioned at least one communications frame in Step S21 may comprise the first communications frame and the second communications frame, and the aforementioned at least one protection indication in Step S21 may comprise the first protection indication and the second protection indication, but the present invention is not limited thereto.

For example, the mode switching may comprise the operation of entering the predetermined MLO-related mode such as the EMLSR mode or the EMLMR mode, the aforementioned at least one protection period mentioned in Step S21 may comprise the protection periods 11 and 12, and the MLO mode change processing mentioned in Step S22 may comprise at least one EMLSR/EMLMR mode enablement operation such as the first EMLSR/EMLMR mode enablement operation and the second EMLSR/EMLMR mode enablement operation. For another example, the mode switching may comprise the operation of exiting the predetermined MLO-related mode such as the EMLSR mode or the EMLMR mode, the aforementioned at least one protection period mentioned in Step S21 may comprise the protection periods 21 and 22, and the MLO mode change processing mentioned in Step S22 may comprise at least one EMLSR/EMLMR mode disablement operation such as the first EMLSR/EMLMR mode disablement operation and the second EMLSR/EMLMR mode disablement operation.

Based on the MLO architecture, the wireless transceiver device can prevent any error due to failing to receive a packet from the other device in time during the mode switching, and more particularly, reserve the aforementioned at least one protection period (e.g., at least one locked period) for the wireless transceiver device to perform the mode switching to change the way of using some internal resources thereof in order to operate correctly, and prevent the other device from sending any packet during the aforementioned at least one protection period, to allow the wireless transceiver device to complete the mode switching and then be ready for interacting with the other device, in order to enhance the overall performance. For brevity, similar descriptions for this embodiment are not repeated in detail here.

For better comprehension, the method may be illustrated with the working flow shown in FIG. 17, but the present invention is not limited thereto. According to some embodiments, one or more steps may be added, deleted, or changed in the working flow shown in FIG. 17. For example, the set of EMLSR/EMLMR links may comprise more than two links, such as all links among the multiple links (e.g., the links Link(1), Link(2) and Link(3)), and the communications frame count of the aforementioned at least one communications frame and the protection indication count of the aforementioned at least one protection indication in Steps S21 and S22 may vary correspondingly. In addition, for the second case that the protection of the first protection period is enabled before executing the mode switching procedure, Step S21 may be deleted, and the wireless transceiver device may notify the other device of the wireless transceiver device's own capability/capabilities through the aforementioned at least one capability indication in advance in Step S10. For brevity, similar descriptions for these embodiments are not repeated in detail here.

In the above embodiments, the STA device 120 such as the non-AP STA MLD 220 may be taken as an example of the wireless transceiver device, and the AP device 110 such as the AP MLD 210 may be taken as an example of the other device, but the present invention is not limited thereto. According to some embodiments, the AP device 110 such as the AP MLD 210 may be taken as an example of the wireless transceiver device, and the STA device 120 such as the non-AP STA MLD 220 may be taken as an example of the other device. For brevity, similar descriptions for these embodiments are not repeated in detail here.

## Claims

1. A method for performing mode switching management in multi-link operation (MLO) architecture, the method being applicable to a wireless transceiver device (120, 220, 110, 210) communicating with another device (110, 210, 120, 220) within a wireless communications system (100) under MLO, **characterized in that** the method comprises:
executing a mode switching procedure regarding a predetermined MLO-related mode in a first protection period dedicated to the mode switching procedure, so that no other transmission request is received during the first protection period;
wherein the first protection period is equal to or longer than the time spent on executing the mode switching.

2. The method of claim 1, **characterized in that** the wireless transceiver device (120, 220, 110, 210) is a multi-link device (MLD) (220, 210).

3. The method of claim 1, **characterized in that** the predetermined MI,O-related mode represents an enhanced multi-link single radio (EMLSR) mode or an enhanced multi-link multi-radio (EMLMR) mode.

4. The method of claim 1, **characterized in that** the mode switching procedure further comprises:
sending a protection indication in a first communications frame from the wireless transceiver device (120, 220, 110, 210) to said another device (110, 210, 120, 220) that informs said another device (110, 210, 120, 220) not to send any transmission request.

5. The method of claim 4, **characterized in that** the protection indication comprises a network allocation vector (NAV) for indicating the first protection period determined by the wireless transceiver device (120, 220, 110, 210).

6. The method of claim 5, **characterized in that** the method further comprises sending another NAV in another first communications frame once the first protection period ends, so that a second protection period starts for the mode switching procedure.

7. The method of claim 4, **characterized in that** the protection indication comprises a power save mode indication to inform said another device (110, 210, 120, 220) that the wireless transceiver device (120, 220, 110, 210) enters a power save mode.

8. The method of claim 7, **characterized in that** the method further comprises sending another power save mode indication to inform said another device (110, 210, 120, 220) that the wireless transceiver device (120, 220, 110, 210) has left the power save mode.

9. The method of claim 4, **characterized in that** the protection indication in the first communications frame represents a first protection indication regarding a first link among multiple links, wherein the wireless transceiver device (120, 220, 110, 210) is arranged to send the first protection indication in the first communications frame from the wireless transceiver device (120, 220, 110, 210) to said another device (110, 210, 120, 220); and the mode switching procedure further comprises:
sending the second protection indication in a second communications frame from the wireless transceiver device (120, 220, 110, 210) to said another device (110, 210, 120, 220) that informs said another device (110, 210, 120, 220) not to send any transmission request.

10. The method of claim 9, **characterized in that** the first protection indication comprises at least one indication of the following: a first network allocation vector (NAV) and a first power save mode indication; and the second protection indication comprises at least one indication of the following: a second NAV and a second power save mode indication.

11. The method of claim 1, **characterized in that** before executing the mode switching procedure, the wireless transceiver device (120, 220, 110, 210) is arranged to perform information exchange with said another device (110, 210, 120, 220) in order to notify said another device (110, 210, 120, 220) of a mode switch processing delay as the first protection period, for reserving the first protection period.

12. A wireless transceiver device (120, 220, 110, 210), for performing mode switching management in multi-link operation (MLO) architecture, the wireless transceiver device (120, 220, 110, 210) being one of multiple devices (110, 120) within a wireless communications system (100), **characterized in that** the wireless transceiver device (120, 220, 110, 210) comprises:
a processing circuit (122, 112), arranged to control operations of the wireless transceiver device (120, 220, 110, 210); and
at least one communications control circuit (124, 114), coupled to the processing circuit (122, 112), arranged to perform communications control, wherein the at least one communications control circuit (124, 114) is arranged to perform wireless communications operations with another device (110, 210, 120, 220) among the multiple devices (110, 120) for the wireless transceiver device (120, 220, 110, 210);
wherein:
the wireless transceiver device (120, 220, 110, 210) is arranged to execute a mode switching procedure regarding a predetermined MLO-related mode in a first protection period dedicated to the mode switching procedure, so that no other transmission request is received during the first protection period;
wherein the first protection period is equal to or longer than the time spent on executing the mode switching.

13. The wireless transceiver device (120, 220, 110, 210) of claim 12, **characterized in that** the wireless transceiver device (120, 220, 110, 210) is a multi-link device (MLD) (220, 210).

14. The wireless transceiver device (120, 220, 110, 210) of claim 12, **characterized in that** the mode switching procedure further comprises:
sending a protection indication in a first communications frame from the wireless transceiver device (120, 220, 110, 210) to said another device (110, 210, 120, 220) that informs said another device (110, 210, 120, 220) not to send any transmission request.

15. The wireless transceiver device (120, 220, 110, 210) of claim 12, **characterized in that** before executing the mode switching procedure, the wireless transceiver device (120, 220, 110, 210) is arranged to perform information exchange with said another device (110, 210, 120, 220) in order to notify said another device (110, 210, 120, 220) of a mode switch processing delay as the first protection period, for reserving the first protection period.
